(19) Europäisches Patentamt
European Patent Office
Office européen des brevets

(11) Publication number: **0 081 406**
**B1**

(12) **EUROPEAN PATENT SPECIFICATION**

(45) Date of publication of patent specification: **05.03.86**

(51) Int. Cl.$^4$: **B 01 F 17/32** // A63H33/28

(21) Application number: **82402065.5**

(22) Date of filing: **10.11.82**

(54) **Bubble composition using multi-purpose surfactant base.**

(30) Priority: **12.11.81 US 320518**

(43) Date of publication of application:
**15.06.83 Bulletin 83/24**

(45) Publication of the grant of the patent:
**05.03.86 Bulletin 86/10**

(84) Designated Contracting States:
**AT CH DE FR GB IT LI NL SE**

(56) References cited:
**DE-A-2 357 335**
**DE-C-1 049 352**
**US-A-3 231 581**
**US-A-3 231 582**
**US-A-3 336 229**

**Chemical Abstracts vol. 90, no. 10, 5 March 1979, Columbus, Ohio, USA L. CHALMERS "New source of balanced imidazoline amphoterics" page 270, abstract no. 76377g**

(73) Proprietor: **Ehrlich, Joseph R.**
**1793 Riverside Drive**
**New York, N.Y. 10034 (US)**

(73) Proprietor: **Wachtel, Jack S.**
**17 York Road**
**Larchmont, N.Y. 10538 (US)**

(72) Inventor: **Ehrlich, Joseph R.**
**1793 Riverside Drive**
**New York, N.Y. 10034 (US)**

(74) Representative: **Bloch, Robert et al**
**39 avenue de Friedland**
**F-75008 Paris (FR)**

**EP 0 081 406 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Soap bubbles are blown from water solutions comprising soap or another surfactant. A great variety of bubble solution formulations have been suggested to feature special effects in bubble making. There are solutions for making large bubbles, "long lasting" bubbles, deep coloured bubbles, split bubbles, self-healing bubbles, multiple bubbles, vanishing bubbles, flaking bubbles, bursting bubbles, high and/or far flying bubbles, sinking bubbles etc. In general, many anionic, non-ionic or amphoteric aqueous solutions with low surface tension lend themselves to bubble or foam-making when air or other gases are blown into such solutions.

Bubbles having special feature as described above require the use of a particular surfactant, with or without modifying agents. No single bubble solution is known with which to obtain more than one or two special effects. Whatever the special effect, each such solution features a separate and different base surfactant upon which the solution is built.

All bubble solutions intended for use as a child's toy, must be non-toxic and non-irritating to skin and eyes before they can be marketed. Most of the published bubble formulations fail to meet this safety requirement.

To have one single safe surfactant base which would allow the formulator to make bubble solutions capable of exhibiting a variety of separate and different special effects, be it by quantitative manipulation and/or with the help of modifying additives, is a very desirable objective.

This invention deals with such a multi-purpose sufactant base. It is a bubble-forming composition as defined in the claims. Using the surfactant base and the formulations as described in this specification, one can make:

A. Clear, bead-forming bubbles that cling to almost any horizontal, vertical or curved surface, and which do not break when touching a solid dry object. Such bubbles remain a complete sphere, adhering only on one single point, either on grass, leaves, wood, concrete paper, metal, glass or most plastics. Such beads can stay in that position for minutes or many hours without collapsing, depending on the formulation.

B. Long distance flying bubbles that withstand wind turbulence and even evade collisions.

C. A stream of floating bubbles, about 80 to 120 per puff of air using a simple straw, which float for several minutes.

D. A stream of vanishing bubbles, which disappear in 3 to 4 seconds. A pipe having several tubes can produce 300 to 400 or more vanishing bubbles that disappear within moments to create a most unusual effect. Such bubbles are dry to the touch, leave no visible trace and can be produced indoors.

E. A cloud of bubbles that change to tiny white, slowly sinking flakes that give the impression of a snowfall.

F. Bubbles that burst in air with a crackle.

G. A stream of "ghost bubbles".

H. Bubbles that dry in air and form hollow hulls.

The new surfactant base consists of a combination of two groups of chemicals, described as Group I and Group II, respectively.

Group I comprises aqueous solutions of hydroxypropyl methyl cellulose and/or hydroxybutyl methylcellulose. These cellulose ethers contain methoxyl groups and either hydroxypropyl or hydroxybutyl groups. Hydroxypropyl methylcellulose is thus the mixed hydroxypropyl and methyl ether of cellulose, and hydroxybutyl methylcellulose is the mixed hydroxybutyl and methyl ether.

Useful Group I hydroxypropyl and hydroxybutyl methyl celluloses are water-soluble. Thus, a methoxy content of from about 15 to about 35%, preferably from about 20 to about 30% by weight, and a hydroxypropoxyl or hydroxybutoxyl content of from about 2 to about 15%, preferably from about 4 to about 12%, by weight, will be suitable.

Also useful is hydroxypropyl cellulose, which is manufactured by reacting alkali cellulose with propylene oxide at elevated temperature. Typical molecular weights range from 60,000 to 1,000,000, and the material is water-soluble below 38°C. Hydroxypropyl cellulose is the 2-hydroxypropyl ether of cellulose.

Dow Chemical Company manufactures hydroxypropyl methylcellulose under the trade names METHOCEL HG, E, F, J, and K and hydroxybutyl methylcellulose under the trade name METHOCEL HB. Premium grades are purer and are generally preferred. Hercules Incorporated manufactures hydroxypropyl cellulose under their KLUCEL trademark.

The water soluble cellulose ethers of Group I differ from other water soluble film formers in two main respects which make them uniquely desirable as a base for bubble solutions. Water solutions of these cellulose ethers have considerable foaming properties by themselves; when air is blown into such solutions they form stiff bubbles. Due to their unusual solubility properties, these cellulose ethers are different in many respects from most other water soluble film formers. They are soluble in cold water and insoluble in hot water. Their water solutions, when heated, become cloudy and gel and/or precipitate; on cooling, the solutions are restored. The solutions also gel with increasing concentration.

Very thin layers of these water solutions release water from the films they form very quickly. The wall of a light weight bubble made from these solutions is such an extremely thin layer. I have discovered that bubbles made from these cellulose ethers in their solution start drying in the air, when they are allowed to

float for at least 15 to 20 seconds. The drying proceeds to a jelly or even to a dry state. When the bubbles have reached the state of a clear jelly, they are strong enough not to break on contact with solid surfaces. They maintain a complete spherical shape and settle down on any solid surface, whether horizontal, vertical or curved. They touch only on one single point and may stay there for up to many hours before they finally collapse. Though those bubbles or clear beads cling to a support, even in an upside-down position, they may bounce a few times before they come to a final landing. A child can catch such bubbles outdoors, e.g. with a plastic paddle (and some skill), and take them home; or he can line them up as in a shooting gallery and shoot them with a water pistol.

When such bubbles are formulated to dry beyond the jelly state, they form opaque, hollow hulls.

These two properties of the substituted cellulose ethers of Group I are most important properties of the new base material of the present invention. That they do not support bacterial growth and are non-toxic and non-irritating and compatible with a great variety of other materials, are additional helpful properties. The cellulose ethers are available in a wide variety of molecular weights and in various thermal gelation temperature ranges which influence their hardness of gel structure and the viscosities of the respective solutions. The available variety of the members of Group I, together with the variety of the members of Group II gives the formulator an almost unlimited latitude in preparing speciality bubble solutions.

Useful water-soluble cellulose ethers of Group I are commercially available from Dow Chemical Company under their "Methocel" trademark and from Hercules Incorporated under their "Klucel" trademark. The Examples employ the following cellulose ethers of Dow Chemical Company, all in the form of aqueous solutions:

*Hydroxypropyl methylcellulose*
E 15—LV, E 50—LV, E 4M, all in the thermal gelation temperature range of 58° to 64°C.
F—50—LV, F—4M, all in the thermal gelation temperature range of 62—68°C.
K—35—LV, K—100 LC, K—4M, K—15M, all in the thermal gelation temperature range of 70—90°C.
60 HG—4M, 90 HG—15M All are Premium Grades.

*Hydroxybutyl methylcellulose*
Methocel HB

The surfactants of Group II are mono- or dicarboxylated imidazoline derivatives of fatty acids of the formula II.

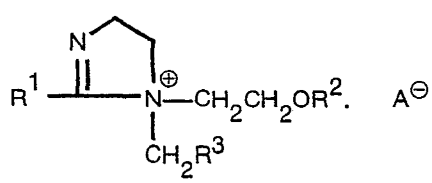

(II)

wherein:

$R^1$ is an alkyl or alkenyl group derived from a fatty acid;
$R^2$ is hydrogen, $-CH_2COOM$, $-CH_2CH_2COOM$ or M;
$R^3$ is $-COOM$, $-CH_2COOM$ or $CHOHCH_2SO_3M$;
M is hydrogen, alkali metal or ammonium; and
A is hydroxy, chloride or sulfate or surface active sulfonate or sulfate.

Preferred imidazoline surfactants have the formulas II—A or II—B

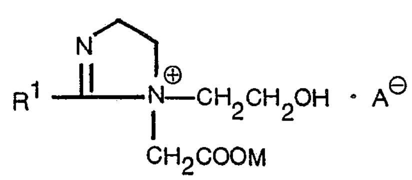

(II—A)

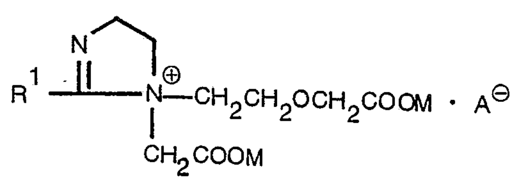

(II—B)

wherein $R^1$ and A are as defined above and M is hydrogen, sodium or ammonium. Preferablly, $R^1$ is derived from a higher fatty acid of 6 to 20 carbon atoms, such as "cocoyl", stearyl, olelyl or lauryl. The term "cocoyl" is used in the art to mean a mixture of alkyl and alkenyl derived from coconut acid of 6 to 18 carbon atoms, but mainly of 10, 12 and 14 carbon atoms.

Useful surfactants of group II also include those compounds of formula II in which $R^3$ is $-CHOHCH_2SO_3M$, particularly those in which $R^1$ is cocoyl and lauryl. The lauryl and cocoyl derivatives tend to have a detoxifying effect and reduce the irritation effect of other components in the admixture.

Useful imidazoline surfactants employed in the Examples that follow include the following materials supplied by Miranol Chemical Company, Irvington, New Jersey:

*Trade Name: Miranol 2MCA*
*CTFA Designation, 1981* — Cocoamphocarboxyglycinate (and) sodium lauryl sulfate (and) hexylene glycol
*Formula IIB;* $R^1$ is cocoyl, M is sodium and A is lauryl sulfate.

*Trade Name: Miranol MHT*
*CTFA Designation, 1981* — Lauroamphoglycinate (and) Sodium Trideceth Sulfate
*Formula IIA;* $R^1$ is lauryl, M is sodium and A is sulfate.

*Trade Name: Miranol H2M Conc.*
*CTFA Designation, 1981* — Lauroamphocarboxyglycinate.
*Formula IIB;* $R^1$ is lauryl, M is hydrogen, and A is OH.

*Trade Name: Miranol C2M Conc.*
*CTFA Designation, 1981* — Cocoamphocarboxyglycinate
*Formula IIB;* $R^1$ is cocoyl, M is hydrogen and A is OH.

*Trade Name: Miranol SM Conc.*
*CTFA Designation, 1981* — Caproamphoglycinate
*Formula IIA;* $R^1$ is decanyl, M is and A is

*Trade Name: Miranol 2 MCAS modified*
*CTFA Designation, 1981* — Cocoamphocarboxyglycinate (and) Sodium lauryl sulfate (and) Sodium Laureth Sulfate (and) propylene glycol.
*Formula IIB;* A mixture of compounds wherein $R^1$ is cocyl, M is sodium and A is lauryl sulfate or laureth-3-sulfate.

*Trade Name: Miranol S2M Conc.*
*CTFA Designation, 1981* — Caproamphocarboxyglycinate

*Trade Name: Miranol CS Conc.*
*Formula II;* $R^1$ is cocoyl, $R^2$ is H, $R^3$ is $CHOHCH_2SO_3Na$ and A is OH

*Trade Name: Miranol HS Conc.*
Formula II; $R^1$ is lauryl, $R^2$, $R^3$ and A as in Miranol CS.

All of the Group II surfactants are non-toxic and non-irritating to the skin and eyes. Some of them even have detoxifying properties in admixture with other materials which by themselves might be irritants. They reduce or eliminate irritation, even eye sting. None of the imidazoline derivatives along, nor the cellulose eithers, can produce such potent bubble solutions as their mixtures together. Together they have a synergistic action.

The quantities of the members of Groups I and II in the bubble solutions, and eventually other additives, determine the final character of the various specialty solutions.

Examples of useful additives are glycerine, propylene glycol, sodium lauryl sulfate in small quantities, fatty acid alkanolamides, succinates and many more are possible. The ratios of the members of the Groups I and II to one another are within wide limits, as may be the ratios of fatty acid alkanolamides, when used, to Group II members.

Generally speaking, the cellulose ether of Group I present in an amount of from about 0.1% to about 5%, preferably about 0.2% to about 4%, most preferably about 0.5% to about 3% by weight. The amount of the Group II imidazoline surfactant is from about 0.8 to about 15% preferably from about 2% to about 8%, most preferably from about 3% to about 6%, by weight. In general as the amount of the cellulose ether increases, the viscosity of the solution also increases. Hence, it may be desirable to use lower molecular weight cellulose ethers when using more than about 40% of the cellulose ether solution. With respect to the imidazoline surfactant, there is no advantage in using more than is effective.

The other additives may include:
0 to about 10%, preferably up to about 5.5% fatty acid alkanolamide;
0 to about 40%, preferably up to about 30% glycerin;
0 to about 30%, preferably up to about 15% propyleneglycol; and
0 to about 2%, preferably up to about 1% sodium lauryl sulfate

It is preferred to prepare the bubble compositions of the invention by first preparing an aqueous

solution of the Group I cellulose ethers and then adding the remaining materials. It is not possible to dissolve the members of Group I in cold water or cold aqueous solutions, nor can one heat such solutions because of foaming and precipitation of the ethers. Aqueous solutions of Group I cellulose ethers are made by heating to about 90°C about 40% of the water needed to make the cellulose ether solution, adding to the hot water the powdered cellulose ether in small portions and then dispersing it with vigorous agitation. The heating is stopped and sufficient crushed ice and cold water are added to make up the remaining approximately 60% water. Continued vigorous agitation will dissolve the dispersed cellulose either in the cooled down water. This is a well-known procedure. It is advisable not to exceed a temperature of 90°C to avoid the formation of steam bubbles which would cause hard and persistent foam in the final solution. As mentioned earlier, those substituted ethers have bubble-forming properties. Even without steam bubbles, it is necessary to let the finished solution stand for 24 hours or longer, to allow the entrapped air to escape. Some of these solutions are quite viscous.

The present invention is illustrated by the following examples. Throughout the specification and claims, all parts and proportions are by weight, unless otherwise stated. The designation "p/w" means parts by weight.

Example 1

15.0 p/w Miranol 2MCA (47% active ingredients)
85.0 p/w 0.75% hydroxy butyl methyl cellulose ether solution
100.0 7.68% solids.

This clear solution is not a "specialty" bubble solution, but a regular bubble solution. It comprises only two ingredients. A water solution of the lauric sulfate of a dicarboxymethylated derivative of cocoimidazoline, and a water solution of a methylcellulose ether with part of its methyl groups being substituted by hydroxybutyl.

Using a conventional "wand", one can make about 20 well-sized bubbles (as with commercial bubble solutions) with one puff of air, the bubbles having various diameters of 5.08 to 7.62 cm or more. This result cannot be achieved by using the aqueous solution of Miranol 2MCA alone or by using the solution of the hydroxy butylmethylcellulose ether alone. Nor can this result be obtained by replacing the cellulose ether solution with water in the above formula.

Example 1 is given to demonstrate the fact that these two ingredients provide a bubble solution base by synergistic action. Other Examples will illustrate how such base formulations can be transformed into a range of "specialty" solutions using additives and/or exchanging either the butylated ether by propylated ether or the Miranol 2MCA by other imidazoline derivatives or both or by making changes in the quantities of the ingredients.

Example 2

15.0 p/w Miranol 2MCA
85.0 p/w 2% solution of Hydroxy propylmethyl cellulose ether 60 HG of Dow Chemical Company
With this solution one can make about 30 colored bubbles which turn into flakes. 8.75% solids

Example 3

Exchanging the imidazoline derative in Example 1, e.g. by using Miranol MHT (34.5% active), gives a solution with which one can produce about 50 to 80 quickly disappearing bubbles. 7.68% solids

Still using only two basic ingredients of Examples 1 to 3 but shifting quantities will give solutions which show some "specialty effects".

Example 4

50.0 p/w of 0.75% hydroxy butylmethyl cellulose ether solution
50.0 p/w Miranol MHT 17.62% solids
With this solution one can produce 50 to 60 floating bubbles with one puff of air, lasting about 20 seconds.

Example 5

30.0 p/w Miranol 2MCA
70 p/w 1% 90—HG Hydroxy propylmethyl cellulose ether solution of Dow Chemical Company 14.8% solids
With this solution one can produce 40 to 50 bubbles, changing to flakes.

However, the foregoing Examples, because of cost, performance and other considerations are not as practical as compared with other solutions of this nature, using additives and other combinations as will be illustrated by the next examples. Examples for bead-forming solutions:

Example 6

1.5 p/w lauric acid 1:1 diethanolamide
12.0 p/w Miranol 2MCA
70.0 p/w 4% solution E—50—LV hydroxy propylmethyl cellulose ether (50 m Pa.s) of Dow Chemical Company
13.0 p/w glycerin
3.5 p/w water 9.94% solids

With this solution one can make long-floating bubbles which, when allowed to float at least for 15 to 20 seconds, will eventually settle down on the ground or cling to other solid objects without breaking. Such bubbles form transparent, completely spherical beads which cling to solid objects just with one single point of their surface and can stay there for many hours before collapsing to a jelly mass.

Example 7

12.0 p/w Miranol 2MCA
73.0 p/w 4% K—35—LV hydroxy propylmethyl cellulose ether solution
15.0 p/w glycerin (35 m Pa.s)**

With this solution one can produce bubbles which behave like those described in example 6.
8.56% solids

**The viscosity information refers to 2% aqueous solution at 20°C.

Example 8

12.0 p/w Miranol 2MCA
40.0 p/w 2% 60 HG (4,000 m Pa.s) hydroxy propyl methylcellulose ether solution.
13.0 p/w 1.5% HB hydroxy butylmethylcellulose ether solution (12,000 m Pa.s)
20.0 p/w 75% HB hydroxy butylmethylcellulose ether solution (12,000 m Pa.s), cellulose ethers of Dow Chemical Company
15.0 glycerin

This solution, likewise, is bead-forming 8.64% solids

Example 9

10.0 p/w Miranol 2MCA
30.0 p/w glycerin
40.0 p/w 2% F—4M cellulose ether solution
20.0 p/w water 5.5% solids

This solution yields deep-colored, very far-and long flying bubbles with 12,7 mm tubes.

Example 10

12.0 p/w Miranol CS (Sulfonate)
13.0 p/w glycerin
75.0 p/w 1% solution of 90HG hydroxy propylmethylcellulose ether of Dow Chemical Company

Bead-forming liquid. 6.75% solids

Example 11

20.0 p/w Miranol MHT
20.0 p/w HB hydroxy butylmethylcellulose ether solution — 0.75% of Dow Chemical Company
30.0 p/w 1% solution 90HG Premium
30.0 p/w glycerin

Bead-forming liquid. 7.45% solids

In many instances the cellulose ethers as well as the imidazoline derivatives are interchangeable against other members of their respective groups within the same formulation, sometimes with small quantitive corrections but without changing the character of the specific "speciality" solution. Examples 6—11 are just a few of such possibilities. All of Examples 6—11 represent bead-forming solutions. When such interchanges are made, the result might sometimes change in the sense that the number of beads or their life time might be different, the latter ranging from minutes to hours, mostly hours. For example, beads obtained with the solution of Example 6 have been observed to stay up to 36 hours before collapsing. Such beads may be caught in the air with plastic, wooden or cardboard paddles on which they can be carried around, or they can be lined up to form a shooting gallery to be shot at with water pistols. This gives a new valuable play value to the old bubble toy.

What has been said about interchangeability of the members of Groups I and II, is also true for the formulation of other "specialty" solutions in the Examples which will follow. However, there is no interchangeability for additives to the base materials of Group I and II without changing the character of such "specialty" solutions.

Example 12

7.7 p/w Miranol MHT (35.5% active)
16.0 p/w 2% 60 HG solution of Dow Chemical Company
4.0 p/w glycerin
5.4 p/w lauric diethanolamide
66.9 p/w water 8.45% solids

With this solution, using a 4 mm diameter straw, one can produce with one puff of air 80 to 110 very long floating bubbles.

Example 13

A similar result can be obtained by exchanging in Example 12, the 7.7 p/w MHT with 5.7 p/w Miranol 2MCA (47% active) and adding 0.6 p/w sodium lauric sulfate, the water content to be adjusted to 68.1 p/w.
9.0% solids

In some combinations of members of Group I and Group II, as in the above case, the presence of a little sodium lauryl sulfate is desirable to improve the appearance of the solutions, helping them to stay clear.

Example 14

5.7 p/w Miranol 2MCA
10.0 p/w 4% E-50-LV solution of Dow Chemical Company
4.0 p/w glycerin
4.0 p/w lauric diethanolamide
.5 p/w sodium lauryl sulfate
75.8 p/w water — 7.7% solids

One puff of air produces 90 to 110 long floating beautifully colored bubbles turning to ghost bubbles.

Example 15

5.0 p/w Miranol C2M
37.0 p/w 2% 60 HG solution of Dow Chemical Company
3.0 p/w glycerin
5.0 p/w lauric diethanolamide
50.0 water — 8.24% solids

100 to 120 very long floating beautifully colored bubbles turning to ghost bubbles.

Example 16

Exchange in Example 15 Miranol C2M with Miranol SM and get a similar result.

Example 17

5.0 p/w Miranol CS
16.0 p/w 2% 60 HG solution of Dow Chemical Company
8.0 p/w glycerin
5.0 p/w lauric diethanolamide
.4 p/w lauryl sodium sulfate
65.6 water

About 90 colored, floating bubbles. — 7.72% solids

Example 18

5.3 p/w Miranol 2MCA
26.5 p/w 0.75% HB solution of Dow Chemical Company
10.0 p/w glycerin
5.0 p/w lauric diethanolamide
.6 p/w sodium lauryl sulfate
52.0 p/w water

100 to 120 colored bubbles — 8.29% solids

Example 19

4.8 p/w Miranol 2MCA
45.0 p/w 4% E-50-LV solution
14.0 p/w 5% E-15-LV solution
5.0 p/w glycerin
.8 p/w sodium lauryl sulfate
4.5 p/w lauric diethanolamide
25.9 p/w water — 10.05% solids

The bubbles formed by this solution exhibit a strange show. When drifting towards a wall, trees or going down towards the ground, they came very close, about one inch, then they change direction and float along a wall upwards or sidewards or float just above the floor or go around a tree, always avoiding collision at the last moment. Only a very few might collide and change to a flake.

Example 20

20.0 p/w Miranol MHT
50.0 p/w 1% 90 HG solution of Dow Chemical Company
15.0 p/w glycerin
15.0 p/w propylene glycol — 7.5% solids

One would expect this formula would yield a bead-forming solution, but the presence of the propylene glycol changes this solution to one which yields 80 to 90 beautifully deep colored bubbles, and no beads.

Example 21

12.0 p/w Miranol 2MCA
73.0 p/w 1% 90 HG solution of Dow Chemical Company
15.0 p/w glycerin — 6.39% solids

This solution yields about 30 to 40 colored bubbles, most of them forming long-lasting beads or, when wind-driven being long distance bubbles; some turning into big flakes.

Example 22

A somewhat similar result may be obtained by using a 3%-K-100 solution of Dow Chemical Company in place of 1% 90 HG solution of Dow Chemical Company in example 21. This gives a perfect bead-forming solution. 7.85% solids.

Example 23

Likewise, using a 2% 60 HG solution of Dow Chemical Company in example 21 in place of the 1% 90 HG solution of Dow Chemical Company gives a similar result.

7.1% solids

Example 24

20.0 p/w Miranol MHT
50.0 p/w 1% 90 HG solution of Dow Chemical Company
30.0 p/w glycerin — 7.5% solids

About 80 colored, very long floating bead-forming bubbles.

Example 25

5.4 p/w Miranol 2MCA
16.0 p/w 1' 90 HG solution of Dow Chemical Company
9.0 p/w propylene Glycol
5.0 p/w lauric diethanolamide
.8 p/w sodium lauryl sulfate
63.8 p/w water — 8.49% solids

By using a multiple head pipe as described in U.S. Patent 4,246,717, one can produce with one puff of air a cloud of several hundreds of bubbles which completely and tracelessly disappear within four seconds. This is not only a weird effect, but also makes indoor use possible; they also crackle.

Example 26

.90 p/w Miranol C2M
1.10 p/w Miranol SM
1.90 p/w Miranol 2MCA
.90 p/w Miranol MHT
1.50 p/w Standapol SH-100 ($Na_2$ Monooleamido Sulfosuccinate 30%)
15.00 p/w 2% 60 HG solution of Dow Chemical Company
4.00p/w glycerin
2.00 p/w propylene glycol
5.50 p/w lauric diethanolamide
.50 p/w sodium lauryl sulfate
66.70 p/w water — 9.0 solids

Yields 80 to 90 long floating bubbles

Example 27

12.0 p/w Miranol 2MCA
86.5 p/w 2% 60 HG or 1% 90 HG solution of Dow Chemical Company
1.5 p/w lauric diethanolamide — 8.15% solids

Solution yields 60 to 80 coloured bubbles which change to slowly sinking white flakes. With multiple head pipe, it looks like light snowing.

Example 28

4.8 p/w Miranol 2MCA
40.0 p/w 4% E-50-LV solution
20.0 p/w 5% E-15-LV solution
3.8 p/w glycerin
4.5 p/w lauric diethanolamide
.6 p/w sodium lauryl sulfate
26.3 p/w water 9.95% solids

About 80 bubbles turning totaly to thin flakes.

When it is desirable to obtain mainly a large number of bubbles with this type of bubble liquid, the addition of fatty acid alkanolamides has shown to be helpful, though not absolutely necessary. In the Examples, lauric acid 1:1 diethanolamide was used, however, other fatty acid diethanolamides can also be used. It is known that when fatty acid alkanolamides are used for that purpose, their effectiveness depends a great deal on proper ratios with respect to other surfactants in the formula. It was found that this rule does not apply to the members of Group II of these bubble bases. An entire line of different ratios of lauric acid diethanolamide to various water-free members of Group II in the formulations was tested with the result that there was no basic difference in the performance among such tested solutions with ratios ranging from 0.07:1 to 4:1. However, the solids content of the various solutions, in particular the concentration of the fatty acid alkanolamide has an influence on the behavior of the various speciality solutions, making solutions with lower concentration working less spectacularly, though still yielding good bubble solutions. As an example:

Example 29

2.12 p/w Miranol 2MCA
18.0 p/w 2% 60 HG solution
2.0 p/w lauric acid diethanolamide
4.0 p/w glycerin
.8 p/w sodium lauryl sulfate
73.08 p/w water 4.1% solids

With this solution, one can produce about 50 colored, floating bubbles.

Example 30

6.0 p/w Miranol 2MCA
18.0 p/w 2% 60 HG solution
.2 p/w lauric acid diethanolamide
4.0 p/w glycerin
71.8 p/w water 3.36% solids

This solution yields about 20 colored bubbles, some of them floating 40 to 50 seconds; this solution has also a ratio of 0.07:1 (see above).

The Examples in this specification are a selection from many hundreds of experiments which have been made. They all indicate that with relatively few and simple modifications (additives and/or quantitative changes) to the basic materials of Groups I and II, astonishing and completely different effects can be achieved. The described solutions come in all grades of viscosities, from low to quite high.

**Claims**

1. A bubble-forming composition, which comprises an aqueous solution of from about 0.1 to about 5% by weight of a cellulose ether selected from the group consisting of hydroxypropyl methylcellulose and hydroxybutyl methylcellulose and mixtures of two or more thereof and from about 0.8 to about 15% by weight of an imidazoline surfactant of formula II:

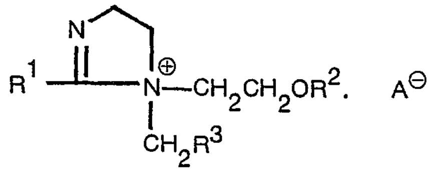

(II)

wherein:

$R^1$ is an alkyl or alkenyl group derived from a fatty acid;
$R^2$ is hydrogen, $-CH_2COOM$, $-CH_2CH_2COOM$ or M;
$R^3$ is $-COOM$, $-CH_2COOM$ or $CHOHCH_2SO_3M$;
M is hydrogen, alkali metal or ammonium; and
A is hydroxy, chloride or sulfate or surface active sulfonate or sulfate.

2. The composition according to claim 1, wherein cellulose ether has a methoxy content of from about 15 to about 35% by weight, and a hydroxypropoxyl or hydroxybutoxyl content of from about 2 to about 15% by weight.

3. The composition according to one of claims 1 and 2, wherein the cellulose ether is present in an amount of from about 0.5% to about 3.0% by weight.

4. The composition according to claim 1, wherein $R^1$ is of 6 to 20 carbon atoms.

5. The composition according to claim 4, wherein $R^1$ is cocoyl, stearyl, olelyl, lauryl or capryl.

6. The composition according to claim 1, wherein said imidazoline comprises
a) cocoamphocarboxyglycinate,
b) lauroamphoglycinate,
c) caproamphoglycinate,
d) lauroamphocarboxyglycinate, or
e) caproamphocarboxyglycinate.

7. The composition according to claim 1, wherein $R^2$ is hydrogen, $R^3$ is $CHOHCH_2SO_3Na$, A is OH and $R^1$ is cocoyl or lauryl.

8. The composition according to one of claims 4 to 7, wherein said cellulose ether is present in an amount of from about 0.1 to about 5% and the imidazoline surfactant is present in an amount of from about 0.8 to about 15% by weight.

9. The composition according to claim 1, wherein there is also present at least one additive selected from the group consisting of
0 to about 10% fatty acid alkanolamide;
0 to about 40% glycerin
0 to about 30% propyleneglycol; and
0 to about 2% sodium lauryl sulfate
all by weight.

**Patentansprüche**

1. Eine blasenbildende Zusammensetzung, die eine wässrige Lösung von 0,1 bis etwa 5 Gew.-% eines Celluloseethers, der ausgewählt ist aus der Gruppe bestehend aus Hydroxypropylmethylcellulose und Hydroxybutylmethylcellulose und Mischungen von zwei oder mehreren dieser Stoffe, und von etwa 0,8 bis etwa 15 Gew.-% eines Imidazolin-grenzflächenaktiven-Stoffes der Formel II:

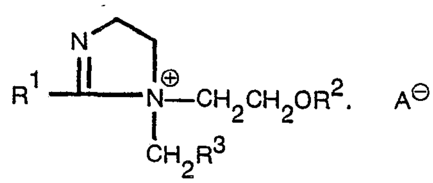

(II)

umfaßt, in der
$R^1$ eine von einer Fettsäure abgeleitete Alkyl- oder Alkenylgruppe,
$R^2$ Wasserstoff, $—CH_2COOM$, $—CH_2CH_2COOM$ oder M,
$R^3$ $—COOM$, $—CH_2COOM$ oder $CHOHCH_2SO_3M$,
M Wasserstoff, ein Alkalimetall oder Ammonium, und
A Hydroxy, Chlorid oder Sulfat oder oberflächenaktives Sulfonat oder Sulfat,
bedeuten.

2. Die Zusammensetzung nach Anspruch 1, bei der der Celluloseether einen Methoxyanteil von etwa 15 bis etwa 35 Gew.-% und einen Hydroxypropoxyl- oder Hydroxybutoxylanteil von etwa 2 bis 15 Gew.-% hat.

3. Die Zusammensetzung nach einem der Ansprüche 1 und 2, bei der der Celluloseether in einer Menge von etwa 0,5 bis etwa 3,0 gew.-% vorhanden ist.

4. Die Zusammensetzung nach Anspruch 1, bei der $R^1$ 6 bis 20 Kohlenstoffatomen umfaßt.

5. Die Zusammensetzung nach Anspruch 4, bei der $R^1$ Cocoyl, Stearyl, Olelyl, Lauryl oder Capryl bedeutet.

6. Die Zusammensetzung gemäß Anspruch 1, bei der das Imidazolin
a) Cocoamphocarboxyglycinat,
b) Lauroamphoglycinat,
c) Caproamphoglycinat,
d) Lauroamphocarboxyglycinat oder
e) Caproamphocarboxyglycinat
umfaßt.

7. Die Zusammensetzung gemäß Anspruch 1, bei der $R^2$ Wasserstoff, $R^3$ $CHOHCH_2SO_3Na$, A OH und $R^1$ Cocoyl oder Lauryl bedeuten.

8. Die Zusammensetzung nach einem der Ansprüche 4 bis 7, bei der der Celluloseether in einer Menge

von etwa 0,1 bis etwa 5 Gew.-% und der Imidazolin-grenzflächenaktive-Stoff in einer Menge von etwa 0,8 bis etwa 15 Gew.-% vorhanden sind.

9. Die Zusammensetzung nach Anspruch 1, bei der mindestens ein Additiv vorhanden ist, das ausgewählt ist aus der Gruppe bestehend aus
0 bis etwa 10 Gew.-% Fettsäurealkanolamid;
0 bis etwa 40 Gew.-% Glycerin
0 bis etwa 30 Gew.-% Propylenglycol und
0 bis etwa 2 Gew.-% Natriumlaurylsulfat.

**Revendications**

1. Composition formant des bulles, qui comprend une solution aqueuse d'environ 0, 1 à environ 5% en poids d'un éther cellulosique choisi dans le groupe constitué d'hydroxypropylméthylcellulose et hydroxybutylméthylcellulose et de mélange de deux ou davantage de ceux-ci et d'environ 0,8 à environ 15% en poids d'un surfactant imidazoline de formule II

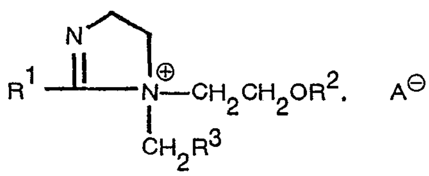 (II)

dans laquelle
$R^1$ est un groupe alkyle ou alcényle dérivé d'un acide gras,
$R^2$ est hydrogène, $—CH_2COOM$, $—CH_2CH_2COOM$ ou M;
$R^3$ est —COOM, $—CH_2COOM$ ou $CHOHCH_2SO_3M$;
M est hydrogène, métal alcalin ou ammonium; et
A est hydroxy, chlorure ou sulfate ou sulfonate ou sulfate tensioactif.

2. Composition selon la revendication 1, dans laquelle l'éther cellulosique a une teneur en méthoxy d'environ 15 à environ 35% en poids, et une teneur en hydroxypropoxyle ou hydroxybutoxyle d'environ 2 à environ 15% en poids.

3. Composition selon l'une des revendications 1 ou 2, dans laquelle l'éther cellulosique est présent en quantité d'environ 0,5% à environ 3,0% en poids.

4. Composition selon la revendication 1, dans laquelle $R^1$ est à 6 à 20 atomes de carbone.

5. Composition selon la revendication 4, dans laquelle $R^1$ est cocoyle, stéaryle, olélyle, lauryle ou capryle.

6. Composition selon la revendication 1, dans laquelle ladite imidazoline comprend
1) cocoamphocarboxyglycinate,
b) lauroamphoglycinate,
c) caproamphoglycinate,
d) lauroamphocarboxyglycinate, ou
e) caproamphocarboxyglycinate.

7. Composition selon la revendication 1, dans laquelle $R^2$ est hydrogène, $R^3$ est $CHOHCH_2SO_3Na$, A est OH et $R^1$ est cocoyle ou lauryle.

8. Composition selon l'une des revendication 4 à 7, dans laquelle ledit éther cellulosique est présent en une quantité d'environ 0,1 à environ 5% et le surfactant imidazoline est présent en une quantité d'environ 0,8 à environ 15% en poids.

9. Composition selon la revendication 1, dans laquelle est également présent un additif choisi dans le groupe constitué de:
0 à environ 10% d'alcanolamide d'acide gras
0 à environ 40% de glycérine
0 à environ 30% de propylèneglycol; et
0 à environ 2% de laurylsulfate de sodium
tous en poids.